# EUROPEAN PATENT APPLICATION

(11) **EP 4 550 032 A1**
(43) Date of publication of application: **07.05.2025**
(21) Application number: 23830949.6
(22) Date of filing: 31.05.2023
(51) Int. Cl.: G02C 7/00

(54) **TRANSMITTING-TYPE OPTICAL ARTICLE SET FOR EYES, LENS SET FOR EYES, TRANSMITTING-TYPE OPTICAL ARTICLE FOR EYES, AND EYEGLASSES**

(30) Priority: 28.06.2022 JP 2022103390; 15.09.2022 JP 2022146896
(71) Applicant: Nikon-Essilor Co., Ltd., Tokyo 130-0026 (JP)
(72) Inventor: SATO Tetsuo, Tokyo 130-0026 (JP); TAKEDOMI Yuka, Tokyo 130-0026 (JP)
(74) Representative: Viering, Jentschura & Partner mbB Patent- und Rechtsanwälte
(86) International application number: PCT/JP2023/020355
(87) International publication number: WO 2024/004499

(57) **Abstract**

Provided is a transmitting-type optical article set for eyes capable of improving the visual contrast. The transmitting-type optical article set for eyes comprising two transmitting-type optical articles for eyes, wherein, when a two-degree field of view CIE standard light source D65 is used as reference light, a color difference ΔE00 between the two transmitting-type optical articles for eyes calculated based on CIEDE2000 is more than 0.23 and less than 33.8.

## Description

### TECHNICAL FIELD

The present disclosure relates to a transmitting-type optical article set for eyes, a lens set for eyes, a transmitting-type optical article for eyes, and spectacles.

### BACKGROUND ART

Patent Literature 1 describes a plastic spectacle lens including a plastic spectacle lens or a plastic wafer including a plastic lens wafer formed of a urethane-based thermosetting resin, a (meth) acrylic thermosetting resin, a polycarbonate resin, or a polyamide resin, and one or a plurality of component layers formed on at least one surface of the plastic wafer, wherein at least one of the plastic wafer and the component layer contains an organic dye satisfying the following condition (A).

Condition (A): A visible light absorption spectroscopic spectrum measured with a chloroform or toluene solution of an organic dye has a main absorption peak (P) between 565 nm and 605 nm, an absorption coefficient at a peak vertex (Pmax) of the main absorption peak (P) is 0.5×10⁵ (ml/g•cm) or more, a peak width at an absorbance of 1/4 of an absrobance at the peak vertex (Pmax) of the main absorption peak (P) is 50 nm or less, a peak width at an absorbance of 1/2 of the absorbance at the peak vertex (Pmax) of the main absorption peak (P) is 30 nm or less, and a peak width at an absorbance of 2/3 of the absorbance at the peak vertex (Pmax) of the main absorption peak (P) is in a range of 20 nm or less.

### CITATION LIST

### PATENT LITERATURE

Patent Literature 1: JP 2013-61653 A

### SUMMARY OF INVENTION

The present disclosure relates to a transmitting-type optical article set for eyes comprising two transmitting-type optical articles for eyes, wherein, when a two-degree field of view CIE standard light source D65 is used as reference light, a color difference ΔE00 between the two transmitting-type optical articles for eyes calculated based on CIEDE2000 is more than 0.23 and less than 33.8.

### BRIEF DESCRIPTION OF DRAWINGS

[FIG. 1] FIG. 1 is a perspective view of an embodiment of spectacles including a transmitting-type optical article set for eyes.
[FIG. 2] FIG. 2 is a perspective view of an embodiment of a transmitting-type optical article for eyes.
[FIG. 3] FIG. 3 is a cross-sectional view of an embodiment of binoculars.

### DESCRIPTION OF EMBODIMENTS

Hereinafter, a transmitting-type optical article set for eyes of the present embodiment will be described in detail.

As the transmitting-type optical article set for eyes, a transmitting-type optical article set for eyes capable of improving visual contrast is desired. The transmitting-type optical article set for eyes of the present embodiment has a characteristic capable of improving the visual contrast.

In the present specification, the word "to" is used as the meaning including numerical values described before and after the word as lower and upper limit values.

### <Transmitting-Type Optical Article Set for Eyes>

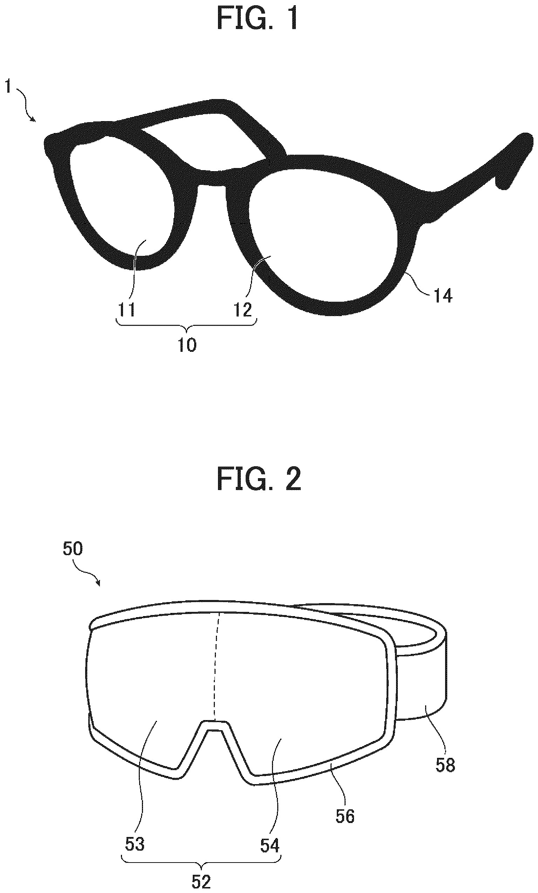

Examples of the transmitting-type optical article set for eyes include a transmitting-type optical article set for eyes (lens set for eyes) 10 used for spectacles 1 illustrated in FIG. 1. Specific examples thereof include a transmitting-type optical article set for eyes including a spectacle lens for right eye 11 and a spectacle lens for left eye 12.

In FIG. 1, the spectacles 1 include a transmitting-type optical article set for eyes (lens set for eyes) 10 including a spectacle lens for right eye 11 and a spectacle lens for left eye 12, and a spectacle frame 14 to which the spectacle lens for right eye 11 and the spectacle lens for left eye 12 are attached.

That is, the transmitting-type optical article set for eyes 10 including the spectacle lens for right eye 11 and the spectacle lens for left eye 12 is the transmitting-type optical article set for eyes in the present disclosure, and is the lens set for eyes. The spectacle lens for right eye 11 and the spectacle lens for left eye 12 are the transmitting-type optical article for eyes in the present disclosure, are each a lens for eye, and are each a spectacle lens.

The spectacle frame 14 is a conventionally known spectacle frame including a pair of lens frames to which the spectacle lens for right eye 11 and the spectacle lens for left eye 12 are attached, and temples for hanging the spectacle frames on user's ears.

In the transmitting-type optical article set for eyes (lens set for eyes) 10 of the present disclosure, a color difference in L*a*b* display between the spectacle lens for right eye 11 and the spectacle lens for left eye 12 is more than 0.23 and less than 33.8. In the present disclosure, the color difference between the two spectacle lenses is a color difference ΔE00 obtained by introducing coefficients corresponding to the respective values of brightness, saturation, and hue in order to correct visual nonuniformity of CIELAB.

Coordinates in the L*a*b* display vary depending on a reference light source. In the present disclosure, a value calculated by using a two-degree field of view CIE standard light source D65, which is standard as outdoor daylight, as reference light is used.

The present inventors have found that by setting the color difference ΔE00 between the two spectacle lenses constituting the transmitting-type optical article set for eyes (lens set for eyes) 10 within the above range, the effect of improving the visual contrast can be obtained not only under outdoor daylight but also at outdoor dusk, under LED light and under fluorescent light in a room, and the like.

In order to obtain the effect of improving the visual contrast, the colors of the two spectacle lenses need to have a color difference that can be recognized by humans when the colors are different. From this viewpoint, the color difference ΔE00 in the L*a*b* display of the two spectacle lenses (spectacle lens for left eye and spectacle lens for right eye) is more than 0.23, more preferably 0.4 or more, and still more preferably 0.6 or more. Meanwhile, when the color difference is too large, binocular rivalry may occur, resulting in discomfort. Therefore, the color difference ΔE00 is less than 33.8, more preferably 20.0 or less, and still more preferably 15.0 or less.

The color difference in the L*a*b* display can be determined by measuring the L*a*b* coordinates of each spectacle lens with a spectrophotometer (for example, U-4100 manufactured by Hitachi High-Technologies Corporation, and the like) using a D65 light source (field of view: 2 degrees) as reference light, and calculating the color difference ΔE00 from the obtained L*a*b* coordinates of the two spectacle lenses.

An example of a specific measurement procedure will be described below. Reference light is measured with a spectrophotometer (U-4100 manufactured by Hitachi High-Technologies Corporation) equipped with an integrating sphere in a state where there is no sample, and then the spectral transmittance of the spectacle lens is measured by measuring transmitted light with the convex surface of the spectacle lens facing an incident light side. A light flux size is about 11 mm in longitudinal width × 8 mm in lateral width at a sample position, a measurement wavelength range is 380 nm to 780 nm, a scan speed is 300 nm/min, a sampling interval is 0.50 nm, the number of measurements is 1, and a slit width is 5 nm.

Subsequently, from the obtained spectral transmittance, a luminous transmittance Y value, and an L* value, an a* value, and a b* value when the D65 light source (field of view: 2 degrees) is used as the reference light are calculated using a color calculation program provided in the U-4100.

Finally, the color difference ΔE00 is calculated from the previously measured L*, a*, and b* values of the two spectacle lenses using a document describing a calculation method (Gaurav Sharma, et. al., The CIEDE2000 Color-Difference Formula: Implementation Notes, Supplementary Test Data, and Mathematical Observations, COLOR research and application, Volume 30, Number 1, February 2005) and a spreadsheet distributed by the authors of the document (http://www2.ece.rochester.edu/~gsharma/ciede2000/).

The spectral transmittance of the spectacle lens may be measured at the optical center of the spectacle lens. This is also true even with a spectacle lens having no diopter because the lens has a curved surface. Since the optical center and the geometric center of the spectacle lens before lens edging are at the same position, the measurement may be performed at the geometric center in the case of the spectacle lens before the lens edging.

When the spectacle lens is a progressive lens, the measurement is performed at any one or two or more of a prism reference point, a far measurement point, and a near measurement point, and it is sufficient if the color difference ΔE00 between the two spectacle lenses (progressive lenses) at each position is more than 0.23 and less than 33.8.

In the case of a transmitting-type optical article for eyes (goggles) including two regions having different colors to be described later, two points in the horizontal direction at the center in the vertical direction of the transmitting-type optical article for eyes are defined as the optical centers of the respective regions. The distance between the two points is 64 mm±10 mm for adults and 50 mm±10 mm for children with the center of the transmitting-type optical article for eyes as a base point. The spectral transmittance may be measured using the two points as the optical centers of the respective two regions.

Here, when the two spectacle lenses have a color difference, the color density of the spectacle lens, that is, the luminous transmittance of the lens is not particularly limited, and when the color difference ΔE00 between the two spectacle lenses is more than 0.23 and less than 33.8, it is possible to obtain the effect of improving the visual contrast while suppressing the occurrence of the binocular rivalry.

Even if the visual contrast is improved by the effect of the present disclosure, when the luminous transmittance of each of the two spectacle lenses is too low, it is difficult to obtain good vision since the amount of light entering the eye is small. From the above viewpoint, the luminous transmittance of each of the two spectacle lenses is preferably 3% or more, more preferably 18% or more, still more preferably 43% or more, and particularly preferably 80% or more. As described later, a fluorescent dye and a phosphorescent dye can also be used for dyeing the spectacle lens, and in this case, the luminous transmittance of the spectacle lens may be more than 100%. The upper limit value of the luminous transmittance of each of the two spectacle lenses is often 120% or less, and more often 110% or less.

The luminous transmittances of the two spectacle lenses may be the same or different. When the difference in luminous transmittance between the two spectacle lenses is large, there is a possibility that binocular stereoscopic vision is affected by the Pulfrich effect. Therefore, the difference in luminous transmittance between the two spectacle lenses is preferably smaller, preferably 70% or less, more preferably 50% or less, and still more preferably 30% or less.

The luminous transmittance can be measured by the method described above. The spectral transmittance of the spectacle lens is measured with a spectrophotometer (for example, U-4100 manufactured by Hitachi High-Technologies Corporation, and the like), and the luminous transmittance can be calculated from the spectral transmittance according to JIS T7333:2018.

Here, the color of each of the two spectacle lenses is not particularly limited as long as the color difference ΔE00 is more than 0.23 and less than 33.8. For example, in a violet blue spectacle lens that is considered to have a visual contrast improving effect as described in Patent Literature 1, the visual contrast improving effect can be further enhanced by adjusting the color such that the color difference ΔE00 between the two spectacle lenses is more than 0.23.

The color can be selected according to the preference of the wearer of the spectacle lens. Since the colors of the two spectacle lenses are mixed in the brain to obtain an intermediate color thereof, it is preferable that the colors of the two spectacle lenses are positioned diametrically opposite to each other across an objective color in an L*a*b* color system.

Furthermore, it is also preferable that the colors of the two spectacle lenses are in a physical complementary color relationship. This is because an achromatic color (gray) is obtained when images entering from left and right eyes are mixed in the brain, and the sense of discomfort is reduced. Note that the physical complementary color is a complementary (mutually complementary relationship) color, and is a color located diametrically opposite with respect to the origin in the L*a*b* color system.

Specifically, for example, as a combination of colors of the two spectacle lenses, it is preferable to select two colors having a relationship of physical complementary colors such as red and cyan, green and magenta, and blue and yellow. In particular, from the viewpoint of reducing the influence of a color at the time of seeing with one eye such as blinking, it is preferable not to use a yellowish color having a strong psychological stimulus, that is, a color having a large b* value on a positive side, and it is more preferable to select a combination of colors of the two spectacle lenses from a red-based color, a blue-based color, a green-based color, and an intermediate color thereof.

Note that the red-based color is a color whose value of a* is large on a positive side in the L*a*b* color system, the green-based color is a color whose value of a* is large on a negative side, and the blue-based color is a color whose value of b* is large on a negative side.

Both the two spectacle lenses may have a chromatic color, and one spectacle lens may have a chromatic color (hereinafter, also referred to as a colored lens) and the other spectacle lens may have an achromatic color (hereinafter, also referred to as a clear lens). That is, the transmitting-type optical article set for eyes (lens set for eyes) of the present disclosure includes at least one colored lens.

The coloring of the lens may be uniform or distributed over the entire lens. For example, by darkening the color of a lens center portion where the line of sight of a user of the spectacle lens is likely to gather, and lightening the color of an outer peripheral portion of the lens where the line of sight of the user of the spectacle lens hardly reaches is lightened while a sufficient color difference between the two spectacle lenses is maintained, whereby the impression of the color when viewed by another person than the user can be weakened. Here, the lens center portion where the line of sight of the user is likely to gather is determined by the user of the spectacle lens and the shape of the spectacle frame, and is appropriately selected from a geometric center and an optical center.

Specifically, in the present disclosure, in the method for measuring the color difference described above, the measurement is performed on the geometric center of a circular lens (spectacle lens before being subjected to lens edging) having a diameter of 75 mm. In this case, the geometric center and the optical center are the same. Meanwhile, after the lens is subjected to lens edging and loaded into the spectacle frame, it is preferable to measure the color difference at the optical center since the geometric center and the optical center are different.

The two spectacle lenses may be spectacle lenses for vision correction to which a predetermined diopter is imparted, may be spectacle lenses having no diopter, or may be lenses for protective glasses. The lens may be a progressive lens whose diopter varies in one lens. Alternatively, the lens may be a lens for magnifying spectacles (spectacle-type loupe).

The two spectacle lenses may also be spectacle lenses for sunglasses that reduce part of the ultraviolet and/or visible light.

Alternatively, the transmitting-type optical article set for eyes (lens set for eyes) may be a separate lens set for eyes that can be attached to spectacles. A lens set separate from the spectacles is also called clip-on.

Hereinafter, the spectacle lens included in the transmitting-type optical article set for eyes (lens set for eyes) will be described in detail.

A lens base serving as the spectacle lens may be plastic or glass. In order to color the plastic base, a colorant may be mixed in the plastic base when the plastic base is cured, or at least one surface of the cured plastic base may be dyed using a predetermined dyeing solution. The plastic base dyed using the dyeing solution is preferable because the color is uniform regardless of the thickness of the base. By providing a film containing a colorant on a non-colored plastic lens (clear lens) or providing an interference film to transmit only at a specific wavelength, the entire lens can be colored.

Similarly, in the glass base, a colorant is mixed with glass itself, a film containing a colorant is provided on a non-colored glass lens (clear lens), or an interference film is provided to transmit only at a specific wavelength, whereby the glass base can be colored as the spectacle lens itself containing a functional film.

Examples of a resin contained in the plastic base as the lens base include an acrylic resin, a thiourethane resin, a methacrylic resin, an allyl resin, an episulfide resin, a polycarbonate resin, a polyurethane resin, a polyester resin, a polystyrene resin, a polyethersulfone resin, a polymethylpentene resin, a diethylene glycol bisallyl carbonate resin, a polyvinyl chloride resin, and a sulfur-containing copolymer.

In the present embodiment, the refractive index of the plastic base at a wavelength of 546.1 nm is preferably in the range of 1.50 to 1.74, for example.

In the present disclosure, the dyeing solution used for dyeing the plastic base preferably contains a dye, a surfactant, and a solvent (for example, water). One dyeing solution may be a dyeing solution containing one type of dye, that is, one color dye, or may be a mixed dyeing solution containing two or more types of dyes, that is, two or more colors of dyes.

That is, in the dyeing of the plastic base, a plurality of dyeing solutions having different colors may be used, or a mixed dyeing solution in which two or more dyes are blended may be used.

The mixed dyeing solution may be prepared by mixing a plurality of dyeing solutions having different colors, or may be prepared by blending a plurality of dyes in advance and using the blended dyes.

The dye may be any dye as long as it leads to the luminous transmittance and the color difference between the two spectacle lenses falling within the limited ranges of the present disclosure.

Examples of the dye include a disperse dye, a reactive dye, a direct dye, a complex dye, an acidic dye, a metal complex dye, a vat dye, a sulfide dye, a fluorescent dye, a phosphorescent dye, a resin coloring dye, and other functional dyes.

Examples of the dye include a yellow (Y) dye, a red (R) dye, a blue (B) dye, a brown dye, a violet dye, an orange dye, and a black dye.

From the viewpoint of reducing the color change of the spectacle lens due to the light source, it is preferable to use two or more types of dyes in combination rather than using only one type of dye.

Examples of the yellow dye include Kayaron Polyester Yellow AL, Kayalon Microester Yellow AQ-LE, Kayalon Microester Yellow C-LS, Kayaron Microester Yellow 5L-E, Kayaron Polyester Yellow 5R-SE(N)200, Kayaron Polyester Yellow BRL-S 200 (manufactured by Nippon Kayaku Co., Ltd.), Kiwalon polyester Yellow ESP eco, Kiwalon polyester Yellow KN-SE 200 (manufactured by Kiwa Chemical Industry Co., Ltd.), FSP-Yellow P-E (manufactured by Futaba Sangyo Co., Ltd.), and Dianix Yellow (manufactured by DyStar Japan Ltd.) .

Examples of the red dye include Kayalon Microester Red AUL-S, Kayalon Microester Red 5L-E, Kayalon Microester Red C-LS conc, Kayalon Microester Red DX-LS, Kayalon polyester Red AN-SE, Kayalon Polyester Red B-LE, Kayaron Polyester Rubine GL-SE 200 (manufactured by Nippon Kayaku Co., Ltd.), Kiwalon polyester Red ESP, Kiwalon polyester Red KN-SE (manufactured by Kiwa Chemical Industry Co., Ltd.), FSP-Red BL (manufactured by Futaba Sangyo Co., Ltd.), and Dianix Red (manufactured by DyStar Japan Ltd.).

Examples of the blue dye include Kayalon Polyester Blue AUL-S dye (manufactured by Nippon Kayaku Co., Ltd.), Dianix Blue AC-E (manufactured by DyStar Japan Ltd.), Kiwalon Polyester Blue ESP, Kiwalon Polyester Blue KN-SE (manufactured by Kiwa Chemical Industry Co., Ltd.), Kayalon Microester Blue AQ-LE, Kayaron Microester Blue 5L-E, Kayalon Microester Blue C-LS conc, Kayalon Microester Blue DX-LS conc, Kayalon Polyester Blue AN-SE, Kayaron Polyester Blue AUL-S (N) (manufactured by Nippon Kayaku Co., Ltd.), and FSP-Blue AUL-S (manufactured by Futaba Sangyo Co., Ltd.) .

The surfactant is not particularly limited as long as the dye can be uniformly dispersed in a solvent such as water.

Examples of the surfactant include ionic surfactants (for example, an anionic surfactant, a cationic surfactant, and the like) and nonionic surfactants.

Examples of the solvent include water and an organic solvent.

Examples of the organic solvent include an alcohol-based solvent, a ketone-based solvent, an ether-based solvent, an ester-based solvent, a hydrocarbon-based solvent, a halogenated hydrocarbon-based solvent, an amide-based solvent, a sulfone-based solvent, and a sulfoxide-based solvent.

The dyeing solution may contain various additives such as a pH adjuster, a viscosity modifier, a leveling agent, a matting agent, a stabilizer, an ultraviolet absorber, and an antioxidant as necessary.

The content of the dye contained in the dyeing solution is preferably 0.001 to 10% by mass, and more preferably 0.01 to 5% by mass with respect to the total mass of the dyeing solution.

The content of the surfactant contained in the dyeing solution is preferably 0.01 to 10% by mass, and more preferably 0.05 to 5% by mass with respect to the total mass of the dyeing solution.

Examples of a method in which at least one surface of a plastic base is dyed to obtain a colored lens include the following three methods:
(1) A method in which the surface of a plastic base is coated with a dyeing solution and heated to dye the surface of the plastic base (coating method);
(2) A method in which a plastic base is dipped in a heated dyeing solution to dye the surface of the plastic base (dipping method); and
(3) A method in which a transfer medium is coated with a sublimation dye, and a plastic base is placed and heated in the vicinity of the transfer medium to dye the surface of the plastic base (sublimation dyeing method).

Among these three methods, the coating method of the above (1) is preferable from the viewpoint that the amount of the dyeing solution used is small and the production cost can be suppressed. Meanwhile, the dip method of the above (2) is preferable from the viewpoint of easy uniform application, and the sublimation dyeing method of the above (3) is preferable from the viewpoint of easy patterning, so that the method may be selected according to the application. These methods may be used alone or in combination.

Examples of the method in which the dyeing solution is applied to the plastic base in the coating method described above include normal coating methods such as brush coating, dip coating, spin coating, roll coating, spray coating, flow coating, and inkjet coating.

As for the surface to be applied, one surface of the plastic base may be coated, or both surfaces thereof may be coated to further increase the dyeing density.

The thickness of the coating of the dyeing solution on the plastic base can be appropriately adjusted, and can be, for example, in the range of 0.01 to 10 µm.

When the plastic base is dyed (colored) in dyeing using the coating method, it is preferable that the surface of the plastic base is coated with the dyeing solution, followed by heat-treatment to cause the dye in the dyeing solution to permeate and diffuse into the surface of the plastic base.

As the heating conditions of the plastic base coated with the dyeing solution, a heating temperature is preferably 70 to 180°C, and a heating time is preferably 10 to 180 minutes. Examples of a heating method include far infrared irradiation heating and UV irradiation heating in addition to air oven heating.

In dyeing with the coating method, when the plastic base is dyed (colored) with a gentle density gradient, the lens is coated with the dyeing solution, and then the surface coated with the solution (dyeing solution surface) is heated in such a manner that the heated region gradually changes, thereby allowing the dye to permeate the inside of the plastic base in an amount corresponding to the density gradient.

After the plastic base may be coated with the dyeing solution and the plastic base coated with the dyeing solution is subjected to heat-treatment, the plastic base may be cleaned.

The method for cleaning the plastic base is not particularly limited as long as the coating layer (applied dyeing solution) on the surface of the plastic base can be removed, and wiping with an organic solvent or cleaning with an alkali cleaner is preferable.

When the plastic base is dyed by the above-described dipping method, the plastic base is dipped in the dyeing solution to allow the dye in the dyeing solution to permeate and diffuse from the surface of the plastic base.

In dyeing with the dipping method, the plastic base is preferably dipped in the dyeing solution heated to 80 to 95°C.

After the dipping is ended, the plastic base may be cleaned. Examples of a method in which the plastic base is cleaned include wiping with a solvent.

The spectacle lens may include a functional film. The functional film is a film disposed on a lens base such as the above-described plastic base, and examples of the functional film include an interference film such as a polarizing film, a photochromic film, a primer film, a hard coat film, and an antireflection film, and a water- and oil-repellent film.

When the spectacle lens includes the functional film disposed on the lens base as described above, the entire spectacle lens including the functional film satisfies the relationship of the luminous transmittance and the color difference described above.

The primer film is a layer used for improving adhesion between members disposed on opposite sides of the film.

A material constituting the primer film is not particularly limited, and known materials can be used. For example, a resin is mainly used. The type of the resin to be used is not particularly limited, and examples thereof include a polyurethane resin, an epoxy resin, a phenol resin, a polyimide resin, a polyester resin, a bismaleimide resin, and a polyolefin resin, with a polyurethane resin being preferable.

A method for forming the primer film is not particularly limited, and known methods can be employed. Examples thereof include a method in which a primer film-forming composition containing a predetermined resin is applied onto a spectacle lens, and subjected to a curing treatment as necessary, to form the primer film.

The hard coat film is a layer that imparts scratch resistance to the spectacle lens.

The hard coat film preferably has a pencil hardness of "H" or more in a test method specified in JIS K5600.

As the hard coat film, a known hard coat film can be used, and examples thereof include an organic hard coat film, an inorganic hard coat film, and an organic-inorganic hybrid hard coat film. For example, in the field of the spectacle lens, an organic-inorganic hybrid hard coat film is generally used.

Examples of a method for forming the hard coat layer include, but are not particularly limited to, a method in which a hard coat layer-forming composition is applied onto a spectacle lens to form a coating film, and the coating film is subjected to a curing treatment such as a light irradiation treatment.

The structure of the antireflection film is not particularly limited, and may be a single layer structure or a multilayer structure.

The antireflection film is preferably an inorganic antireflection film. The inorganic antireflection film is an antireflection film formed of an inorganic compound.

In the case of the multilayer structure, it is preferable to have a structure in which a low refractive index layer(s) and a high refractive index layer(s) are alternately laminated. Examples of a material constituting the high refractive index layer include oxides of titanium, zirconium, aluminum, niobium, tantalum, and lanthanum. Examples of a material constituting the low refractive index layer include an oxide of silica.

A method for producing the antireflection film is not particularly limited, but examples thereof include dry methods such as a vacuum vapor deposition method, a sputtering method, an ion plating method, an ion beam assist method, and a CVD method.

Here, in the above-described example, the lenses for eyes included in the lens set for eyes are the spectacle lens for right eye and the spectacle lens for left eye, but the present invention is not limited thereto, and the lens for eyes may be a contact lens. That is, the lens set for eyes may include a contact lens for right eye and a contact lens for left eye, and a color difference in L*a*b* display between the contact lens for right eye and the contact lens for left eye may be more than 0.23 and less than 33.8.

When the color difference between the contact lens for right eye and the contact lens for left eye satisfies the above range, the effect of improving the visual contrast can be obtained. The two contact lenses may be a contact lens for vision correction to which a predetermined diopter is imparted, or may be a contact lens having no diopter.

### <Binocular>

The transmitting-type optical article set for eyes of the present disclosure may be used for an optical article for visual recognition in binocular vision. Examples of the optical article include a binocular. The binocular may be a binocular telescope or a binocular microscope.

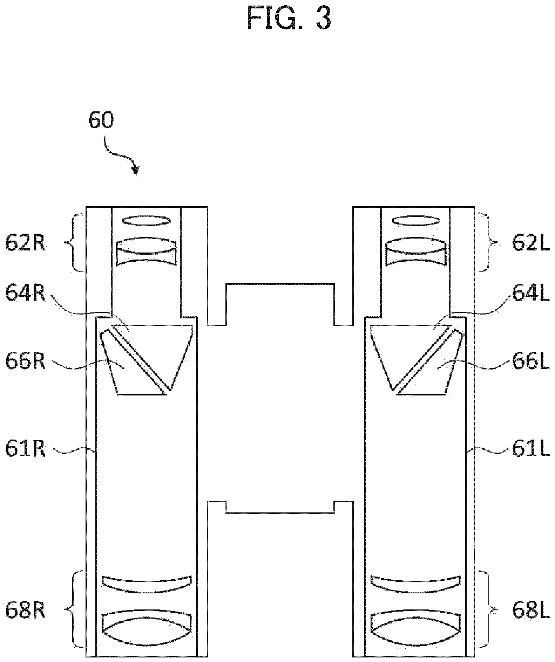

Examples of the binocular telescope include a binocular telescope 60 having the configuration of a cross-sectional view illustrated in FIG. 3. Specific examples thereof include a binocular telescope 60 including a light shielding cylinder for right eye 61R and a light shielding cylinder for left eye 61L. The light shielding cylinder for right eye 61R includes, in order from the user side, an eyepiece lens group for right eye 62R, a dach prism for right eye 64R, an auxiliary prism for right eye 66R, and an objective lens group for right eye 68R. The light shielding cylinder for left eye 61L includes, in order from the user side, an eyepiece lens group for left eye 62L, a dach prism for left eye 64L, an auxiliary prism for left eye 66L, and an objective lens group for left eye 68L.

In the binocular telescope 60, the eyepiece lens group for right eye 62R, the dach prism for right eye 64R, the auxiliary prism for right eye 66R, and the objective lens group for right eye 68R correspond to an optical system for right eye, and the eyepiece lens group for left eye 62L, the dach prism for left eye 64L, the auxiliary prism for left eye 66L, and the objective lens group for left eye 68L correspond to an optical system for left eye. That is, the binocular telescope 60 includes the optical system for left eye and the optical system for right eye. Here, a color difference in L*a*b* display between the optical system for left eye and the optical system for right eye is more than 0.23 and less than 33.8. As a result, in the binocular telescope 60, the effect of improving the visual contrast can be obtained.

Note that, in the binocular telescope 60, as long as the color difference between the entire optical system for right eye and the entire optical system for left eye is more than 0.23 and less than 33.8, either the lens or the prism constituting each optical system may be colored. For example, an eyepiece lens for right eye and an eyepiece lens for left eye may satisfy the color difference, an objective lens for right eye and an objective lens for left eye may satisfy the color difference, the dach prism for right eye and the dach prism for left eye may satisfy the color difference, or the auxiliary prism for right eye and the auxiliary prism for left eye may satisfy the color difference. That is, the above-described transmitting-type optical article set for eyes (lens set for eyes) may be used as the lenses constituting the optical systems of the binocular telescope.

Alternatively, as long as the color difference between the entire optical system for right eye and the entire optical system for left eye is more than 0.23 and less than 33.8, two or more of the lenses and the prism constituting each optical system may be colored, or all of the lenses and the prisms may be colored.

A method for coloring the eyepiece lens or the objective lens used for the binocular is not particularly limited, and the same method as that of the spectacle lens can be used. As the base of the eyepiece lens or the objective lens, the same base as that of the spectacle lens can be used.

A method for coloring the auxiliary prism or the dach prism used for the binocular is not particularly limited, and the same method as that of the spectacle lens can be used. As the base of the auxiliary prism or the dach prism, for example, known optical glass can be used.

The binocular telescope 60 may include a known configuration in addition to the configuration illustrated in FIG. 3. Examples of the known configuration include an intermediate lens and an optical filter. The above configuration can also correspond to the component of the optical system.

The binocular telescope 60 illustrated in FIG. 3 has a configuration in which the dach prism for right eye 64R, the auxiliary prism for right eye 66R, the dach prism for left eye 64L, and the auxiliary prism for left eye 66L are used, but the binocular of the present disclosure may have a configuration in which one set of Porro prisms for right eye and one set of Porro prisms for left eye are used instead of the above prisms.

While FIG. 3 illustrates an aspect of the binocular telescope 60, the binocular of the present disclosure may be a binocular microscope. Also in the binocular microscope of the present disclosure, similarly to the binocular telescope described above, it is possible to impart a function of giving a predetermined color difference to arbitrary components of the optical system for right eye and the optical system for left eye from the objective lenses to the eyepiece lenses in the optical systems. As the binocular microscope, there are binocular microscopes having various configurations such as a stereomicroscope and an industrial and biological microscope, but the present disclosure can be applied to any case.

The binocular of the present disclosure also has improved visual contrast in binocular vision.

### <Transmitting-Type Optical Article for Eyes>

One example of the transmitting-type optical article for eyes is, for example, a transmitting-type optical article for eyes 52 utilized for goggles 50 illustrated in FIG. 2.

In FIG. 2, the goggles 50 include the transmitting-type optical article for eyes 52, a frame 56 to which the transmitting-type optical article for eyes 52 is attached, and a band 58 for wearing the goggles 50 on the user's head.

The frame 56 and the band 58 are similar to a frame and a band used in conventionally known goggles.

The transmitting-type optical article for eyes 52 includes two regions having different colors, that is, a region for right eye 53 and a region for left eye 54. In the example illustrated in FIG. 2, as viewed from the user, a region on the right side of the center of the transmitting-type optical article for eyes 52 is the region for right eye 53, and a region on the left side of the center is the region for left eye 54.

The color difference in L*a*b* display between the region for right eye 53 and the region for left eye 54 is more than 0.23 and less than 33.8.

When the color difference between the region for right eye 53 and the region for left eye 54 satisfies the above range, the effect of improving the visual contrast can be obtained.

The preferable ranges of the luminous transmittance of and the color difference between the region for right eye 53 and the region for left eye 54 are the same as the preferable range of the color difference between the spectacle lens for right eye 11 and the spectacle lens for left eye 12 of the transmitting-type optical article set for eyes (lens set for eyes) 10 described above.

Note that, in the example illustrated in FIG. 2, the transmitting-type optical article for eyes 52 includes the region for right eye 53 and the region for left eye 54, but is not limited thereto, and at least a part of a region including a region corresponding to the field of view of the right eye of the user of the transmitting-type optical article for eyes 52 may be the region for right eye 53, and at least a part of a region including a region corresponding to the field of view of the left eye of the user may be the region for left eye 54. That is, the transmitting-type optical article for eyes 52 may include a region other than the region for right eye 53 and the region for left eye 54.

The transmitting-type optical article for eyes 52 is obtained by coloring at least one of a region to be the region for right eye 53 and a region to be the region for left eye 54 of the plastic base. That is, in the transmitting-type optical article for eyes 52, both the region for right eye 53 and the region for left eye 54 may be chromatic, or one region may be chromatic, with the other region being achromatic.

As the material of the plastic base of the transmitting-type optical article for eyes 52, the same material as that of the lens base described in the foregoing transmitting-type optical article set for eyes (lens set for eyes) 10 can be used.

Examples of a method for coloring the plastic base of the transmitting-type optical article for eyes 52 include the same coloring method as that of the above-described transmitting-type optical article set for eyes (lens set for eyes). As the dyeing solution used for dyeing in the case of coloring by the dyeing, the same solution as the dyeing solution described in the above-described transmitting-type optical article set for eyes (lens set for eyes) 10 can be used.

As a method in which the surface of the plastic base is dyed to obtain the transmitting-type optical article for eyes 52 including the region for right eye 53 and the region for left eye 54, for example, while a portion to be one of the regions is masked, a portion to be the other region may be dyed in a desired color by the same coating method, dipping method, or sublimation dyeing method or the like as the above-described dyeing method, followed by dyeing the portion to be the one of the regions in another desired color by the same method while the dyed other region is masked.

### EXAMPLES

Hereinafter, a transmitting-type optical article set for eyes of the present disclosure will be described in more detail with reference to Examples and Comparative Examples, but the present embodiment is not limited by these examples at all.

### (Preparation of Dyeing Solutions)

First, each dyeing solution was prepared using a dye, a surfactant, and pure water.

Pure water (1000 parts by mass) was placed in a container, and FSP YELLOW FL dye (manufactured by Futaba Sangyo Co., Ltd.) (2.0 parts by mass) as a yellow dye and Nicca Sunsolt #7000 (trade name, manufactured by Nicca Chemical Co., Ltd.) (1.0 parts by mass) were added to obtain a dyeing solution 1. Pure water (1000 parts by mass) was placed in a container, and FSP BLUE AULS dye (manufactured by Futaba Sangyo Co., Ltd.) (2.0 parts by mass) as a blue dye and Nicca Sunsolt #7000 (1.0 parts by mass) were added to obtain a dyeing solution 2. Pure water (1000 parts by mass) was placed in a container, and FSP RED BL dye (manufactured by Futaba Sangyo Co., Ltd.) (2.0 parts by mass) as a red dye and Nicca Sunsolt #7000 (1.0 parts by mass) were added to obtain a dyeing solution 3.

### (Dyeing of Plastic Lens and Preparation of Colored Lens 1)

Next, the prepared three dyeing solutions 1, 2, and 3 were each heated to 90°C, and a plastic lens (Nikon Lite 3AS, size: 75φ, center thickness: 2 mm, manufactured by Nikon-Essilor Co., Ltd.) having a refractive index of 1.60 was dipped in each of the dyeing solutions 1, 2, and 3, to prepare a light red purple lens.

Next, on the surface of the obtained colored lens, a urethane-based primer film (impact-resistance-improving coat film) having a thickness of about 1 µm, a silicone-based scratch resistance-improving hard coat film having a thickness of about 2 µm, a multilayer antireflection coat film formed of an inorganic oxide having a thickness of about 0.3 µm by a vacuum vapor deposition method, and a fluorine-based, water- and oil- repellent film were disposed in this order to obtain an objective colored lens 1.

### (Dyeing of Plastic Lens and Preparation of Colored Lenses 2 to 5)

A light blue violet lens was prepared in the same manner as the colored lens 1 except that a plastic lens (Nikon Lite 3AS) having a refractive index of 1.60 was dipped in each of the two dyeing solutions 2 and 3 and the dipping time was changed. Similarly to the colored lens 1, a urethane-based primer film, a silicone-based scratch resistance-improving hard coat film, a multilayer antireflection coat film, and a water- and oil-repellent film were disposed in this order on the surface of the obtained colored lens, whereby each of the objective colored lenses 2 to 5 was obtained.

### (Dyeing of Plastic Lens and Preparation of Colored Lenses 6 to 19)

Lenses having various color tones were prepared in the same manner as the colored lens 1 except that a plastic lens (Nikon Lite 3AS) having a refractive index of 1.60 was dipped in any one or more of the same three dyeing solutions 1, 2, and 3 as those of the colored lens 1, and the dipping time was changed. Similarly to the colored lens 1, a urethane-based primer film, a silicone-based scratch resistance-improving hard coat film, a multilayer antireflection coat film, and a water- and oil-repellent film were disposed in this order on the surface of the obtained colored lens, whereby each of the objective colored lenses 6 to 19 was obtained.

### (Preparation of Non-Colored Lenses 1 and 2)

Similarly to the colored lens 1, a urethane-based primer film, a silicone-based scratch resistance-improving hard coat film, a multilayer antireflection coat film, and a water- and oil-repellent film were disposed in this order on the surface of a plastic lens (Nikon Lite 3AS) having a refractive index of 1.60, whereby each of the objective non-colored lenses 1 and 2 was obtained.

### (Evaluation of Lenses)

The L*a*b* coordinates of each prepared lens were measured by the method described above using U-4100 spectrophotometer manufactured by Hitachi High-Technologies Corporation. At this time, a D65 light source (field of view: 2 degrees) was used as reference light.

The luminous transmittance Y, the L*a*b* coordinates, and the color tone of the lens when observed under a white LED light are shown in Table 1. The non-colored lens was recognized as light gray due to the color of the plastic material itself, the ultraviolet absorber and bluing agent added to the lens, and the characteristics of transmitted light of the multilayer antireflection coating film.

### [Table 1]

**Table 1**

| | Luminous transmittance Y (%) | Brightness L* | Chromaticity a* | Chromaticity b* | Color tone of lens |
|---|---|---|---|---|---|
| Colored lens 1 | 94.74 | 97.93 | -0.14 | 1.88 | Light red purple |
| Colored lens 2 | 95.14 | 98.09 | -0.70 | 1.96 | Light blue purple |
| Colored lens 3 | 95.29 | 98.15 | -0.60 | 1.77 | Light blue purple |
| Colored lens 4 | 95.37 | 98.18 | -0.54 | 1.60 | Light blue purple |
| Colored lens 5 | 95.27 | 98.14 | -0.53 | 1.66 | Light blue purple |
| Colored lens 6 | 96.42 | 98.60 | 0.83 | 1.06 | Light pink |
| Colored lens 7 | 96.40 | 98.59 | 0.42 | 1.03 | Light blue |
| Colored lens 8 | 95.22 | 98.12 | 1.39 | 1.18 | Light pink |
| Colored lens 9 | 95.29 | 98.15 | 0.48 | 0.94 | Light blue purple |
| Colored lens 10 | 95.96 | 98.42 | 0.50 | 1.98 | Light orange |
| Colored lens 11 | 95.62 | 98.28 | -0.48 | 0.92 | Light blue |
| Colored lens 12 | 96.04 | 98.45 | -0.40 | 1.98 | Light green |
| Colored lens 13 | 96.81 | 98.75 | -0.42 | 3.02 | Light yellow |
| Colored lens 14 | 53.30 | 78.05 | 13.57 | -8.69 | Red purple |
| Colored lens 15 | 64.15 | 84.04 | 13.87 | 11.98 | Orange |
| Colored lens 16 | 57.82 | 80.64 | 14.43 | -0.63 | Red purple |
| Colored lens 17 | 56.85 | 80.09 | 5.36 | -0.47 | Red gray |
| Colored lens 18 | 90.82 | 96.34 | -12.47 | 50.41 | Yellow |
| Colored lens 19 | 48.87 | 75.37 | -3.24 | -6.13 | Blue gray |
| Non-colored lens 1 | 96.75 | 98.73 | -0.81 | 2.19 | Light gray |
| Non-colored lens 2 | 96.78 | 98.74 | -0.76 | 2.06 | Light gray |

### [Examples 1 to 10, Comparative Examples 1 to 3]

The lens for right eye and the lens for left eye were combined in combinations shown in the following Table 2 to obtain lens sets for eyes of Examples and Comparative Examples. The color difference ΔE00 in each lens set and the absolute value ΔY of the difference in luminous transmittance are also shown.

### [Table 2]

**Table 2**

| | Right eye | Left eye | ΔE00 | ΔY |
|---|---|---|---|---|
| Example 1 | Colored lens 2 | Colored lens 4 | 0.40 | 0.23 |
| Example 2 | Colored lens 6 | Colored lens 7 | 0.59 | 0.02 |
| Example 3 | Colored lens 1 | Colored lens 5 | 0.63 | 0.53 |
| Example 4 | Colored lens 8 | Colored lens 9 | 1.30 | 0.07 |
| Example 5 | Colored lens 8 | Colored lens 10 | 1.52 | 0.75 |
| Example 6 | Colored lens 8 | Colored lens 11 | 2.75 | 0.40 |
| Example 7 | Colored lens 8 | Colored lens 12 | 2.75 | 0.82 |
| Example 8 | Colored lens 8 | Colored lens 13 | 3.21 | 1.59 |
| Example 9 | Colored lens 16 | Colored lens 17 | 8.10 | 0.97 |
| Example 10 | Colored lens 14 | Colored lens 15 | 15.23 | 10.85 |
| Comparative Example 1 | Non-colored lens 1 | Non-colored lens 2 | 0.13 | 0.04 |
| Comparative Example 2 | Colored lens 2 | Colored lens 3 | 0.23 | 0.14 |
| Comparative Example 3 | Colored lens 18 | Colored lens 19 | 33.78 | 41.96 |

### [Evaluation]

A black Landolt ring was displayed on the white background of a liquid crystal display for vision measurement (CS Pola 600 manufactured by Essilor Instruments). The luminance of the liquid crystal display was measured with a spectral luminance meter SR-3AR manufactured by TOPCON HOUSE CORPORATION and was found to be 202 cd/m². The room was illuminated downward with a white LED lamp installed on a ceiling, and the illuminance was 300 lux when measured upward at a location where the liquid crystal display was installed.

A test subject had hit or her vision corrected with a spectacle lens or a contact lens as necessary, and when the test subject observed the liquid crystal display from a position 2.5 meters away from the liquid crystal display, a Landolt ring having a luminance contrast setting value of 100% was made clearly visible. The actually measured value of the luminance contrast was 99%.

Next, the luminance contrast of the Landolt ring was set to 10%, and the Landolt ring was reduced to a size in which the direction of the cut of the Landolt ring was barely distinguishable. The actually measured value of the luminance contrast was 13%. It was confirmed whether the visual contrast was improved and the cut of the Landolt ring was more clearly visible when each lens set for eyes was worn by the test subject.

Evaluation was made on whether the visual contrast was improved and the Landolt ring was more clearly visible when each lens set for eyes was worn by the test subject. In the evaluation, in order to remove the influence of the shape of the spectacle lens and the frame, using the case where the non-colored lens pair shown in Comparative Example 1 was worn as the reference, based on the color difference between the two spectacle lenses, it was determined whether vision was clearer than the vision in Comparative Example 1.

It was also determined whether each lens set for eyes was wearable without annoyance caused by the color difference between the two spectacle lenses (binocular rivalry), the difference in luminous transmittance, and the like at the time of wearing.

Such evaluation was performed with five test subjects and rated as the number of test subjects who felt the effects. The results are shown in Table 3.

### [Table 3]

**Table 3**

| | Number of test subjects feeling effects | Number of test subjects determining as wearable |
|---|---|---|
| Example 1 | 4 | 5 |
| Example 2 | 5 | 5 |
| Example 3 | 5 | 5 |
| Example 4 | 5 | 5 |
| Example 5 | 5 | 5 |
| Example 6 | 5 | 5 |
| Example 7 | 5 | 5 |
| Example 8 | 5 | 5 |
| Example 9 | 5 | 5 |
| Example 10 | 5 | 5 |
| Comparative Example 1 | 0 | 5 |
| Comparative Example 2 | 0 | 5 |
| Comparative Example 3 | 5 | 0 |

As compared with Comparative Example 1 in which ΔE00 was 0.13, 4 of 5 test subjects felt the visual contrast improvement effect in Example 1 in which ΔE00 was 0.40. At the time of wearing, the color difference and the difference in the luminous transmittance between the two spectacle lenses was not noticeable, and 5 of 5 test subjects determined the lens set as wearable. In Examples 2 to 10, the larger the ΔE00 was, the stronger the visual contrast improvement effect was felt, and 5 of 5 test subjects felt the visual contrast improvement effect.

In Examples 4 to 8, the lens color for right eye was fixed, and the lens color for left eye was variously changed. While the preferred color combination was different depending on the preference of the test subject, the visual contrast improvement effect could be obtained in any color combination.

In Comparative Example 2 in which ΔE00 was 0.23, the visual contrast improvement effect was not confirmed as compared with Comparative Example 1. In Comparative Example 3, the visual contrast improvement effect was confirmed, but since the color difference ΔE00 between the two spectacle lenses was as large as 33.78, discomfort was caused by binocular rivalry, and 5 of 5 test subjects determined the lens set as unwearable.

### REFERENCE SIGNS LIST

1 spectacles
10 transmitting-type optical article set for eyes (lens set for eyes)
11 spectacle lens for right eye
12 spectacle lens for left eye
14 spectacle frame
50 goggles
52 transmitting-type optical article for eyes
53 region for right eye
54 region for left eye
56 frame
58 band
60 binocular telescope
61R light shielding cylinder for right eye
61L light shielding cylinder for left eye
62R eyepiece lens group for right eye
62L eyepiece lens group for left eye
64R dach prism for right eye
64L dach prism for left eye
66R auxiliary prism for right eye
66L auxiliary prism for left eye
68R objective lens group for right eye
68L objective lens group for left eye

## Claims

1. A transmitting-type optical article set for eyes comprising two transmitting-type optical articles for eyes,
wherein, when a two-degree field of view CIE standard light source D65 is used as reference light, a color difference ΔE00 between the two transmitting-type optical articles for eyes calculated based on CIEDE2000 is more than 0.23 and less than 33.8.

2. A lens set for eyes comprising two lenses for eyes,
wherein, when a two-degree field of view CIE standard light source D65 is used as reference light, a color difference ΔE00 between the two lenses for eyes calculated based on CIEDE2000 is more than 0.23 and less than 33.8.

3. The lens set for eyes according to claim 2, wherein the lenses for eyes are spectacle lenses or contact lenses.

4. A transmitting-type optical article for eyes comprising two regions having different colors,
wherein, when a two-degree field of view CIE standard light source D65 is used as reference light, a color difference ΔE00 between the two regions calculated based on CIEDE2000 is more than 0.23 and less than 33.8.

5. Spectacles comprising:
a spectacle lens for left eye; and a spectacle lens for right eye,
wherein, when a two-degree field of view CIE standard light source D65 is used as reference light, a color difference ΔE00 between the two spectacle lenses calculated based on CIEDE2000 is more than 0.23 and less than 33.8.

6. A binocular comprising:
an optical system for left eye; and an optical system for right eye,
wherein, when a two-degree field of view CIE standard light source D65 is used as reference light, a color difference ΔE00 between the two optical systems calculated based on CIEDE2000 is more than 0.23 and less than 33.8.
